(19) Europäisches Patentamt
European Patent Office
Office européen des brevets

(11) **EP 4 455 712 A1**

(12) **EUROPÄISCHE PATENTANMELDUNG**

(43) Veröffentlichungstag:
**30.10.2024   Patentblatt 2024/44**

(21) Anmeldenummer: **24155873.3**

(22) Anmeldetag: **05.02.2024**

(51) Internationale Patentklassifikation (IPC):
**G01S 5/02** (2010.01)

(52) Gemeinsame Patentklassifikation (CPC):
**G01S 5/02213; G01S 5/02216; G01S 5/0242**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität: **28.04.2023   PCT/EP2023/061372**

(71) Anmelder: **Lambda: 4 Entwicklungen GmbH
22299 Hamburg (DE)**

(72) Erfinder: **Reimann, Rönne
22769 Hamburg (DE)**

(74) Vertreter: **Raffay & Fleck
Patentanwälte
Grosse Bleichen 8
20354 Hamburg (DE)**

Bemerkungen:
Die Patentansprüche wurden nach dem Anmeldetag
eingereicht (R. 68(4) EPÜ).

(54) **VERFAHREN ZUR LOKALISATION RELATIV ZU EINEM ANKERNETZ MITTELS UNIDIREKTIONALER KOMMUNIKATION**

(57)     Die Anmeldung betrifft ein Verfahren zur Zeitsynchronisation, Frequenzsynchronisation und/oder Ermittlung einer Zeitdifferenz und/oder Frequenzabweichung zwischen einem ersten und einem zweiten Objekt, zum Beispiel Ankern (A1, A2). Für die Entfernungsbestimmung ist es bekannt, mit in-line phase return zu arbeiten, also die gemessene Phase an einem empfangenen Signal zu nutzen und die Phase des darauf gesendeten Antwortsignals basierend auf der gemessenen Phase zu modifizieren, indem auf eine vorbestimmte Phasenlage die gemessene Phase addiert wird und das Antwortsignal mit dem durch diese Addition erhaltenen Phasenlage gesendet wird. Erfindungsgemäß wird mit Signalen zwischen zwei Objekten mit bekannter Phasenbeziehung der bei unterschiedlichen Frequenzen gesendeten Signale und/oder auf unterschiedliche Frequenzen abgestimmten PLLs gearbeitet.

Fig. 1

Fig. 2

**Beschreibung**

Die Anmeldung betrifft ein Verfahren zur Zeitsynchronisation, Frequenzsynchronisation und/oder Ermittlung einer Zeitdifferenz und/oder Frequenzabweichung zwischen einem ersten und einem zweiten Objekt, zum Beispiel Ankern.

Derartige System sind unterschiedlich bekannt, beispielsweise als GPS oder aus der WO202209651 5A1 sowie EP 2710398 B1 .

Auch ist die einseitige Entfernungsbestimmung beispielweise aus der WO 2022 096 091 A1 bekannt.

Für die Entfernungsbestimmung ist es bekannt, mit in-line phase return zu arbeiten, also die gemessene Phase an einem empfangenen Signal zu nutzen und die Phase des darauf gesendeten Antwortsignals basierend auf der gemessenen Phase zu modifizieren, indem auf eine vorbestimmte Phasenlage die gemessene Phase addiert wird und das Antwortsignal mit dem durch diese Addition erhaltenen Phasenlage gesendet wird. Aus der US 8,446,254 B2 ist es beispielsweise bekannt, das Antwortsignal mit genau der Phase des empfangenen Abfragesignals zurückzusenden, die aber noch den Nachteil mitbringt, dass eine zeitliche Information fehlt. Darin ist auch ein entsprechendes in-line phase return zu sehen, bei der beispielweise zur Phase null immer die empfangene Phase des Abfragesignals für die Aussendung des Antwortsignals addiert wird. Wäre hier die vorbestimmte Phase nicht null, sondern die einer PLL deren Phasenlage relativ zur gemeinsamen Zeit bekannt ist, würde dies weitere Vorteile bringen.

Aufgabe der vorliegenden Erfindung ist es ein Verfahren zur Zeitsynchronisation und/oder Ermittlung einer Abweichung zwischen Zeitgebern, aber alternativ oder zusätzlich auch zur Frequenzsynchronisation und/oder Ermittlung einer Frequenzabweichung lokaler PLLs zweier Objekte anzugeben, das zuverlässiger, flexibler und/oder schnelle ausgestaltet ist als aus dem Stand der Technik bekannt.

Gelöst wird die Aufgabe durch das nachfolgend näher beschriebene Verfahren zur Zeitsynchronisation und/oder Ermittlung einer Abweichung zwischen Zeitgebern, aber alternativ oder zusätzlich auch zur Frequenzsynchronisation und/oder Ermittlung einer Frequenzabweichung lokaler PLLs der Objekte.

Zur Zeitsynchronisation und/oder Ermittlung einer Abweichung zwischen Zeitgebern, aber alternativ oder zusätzlich auch zur Frequenzsynchronisation und/oder Ermittlung einer Frequenzabweichung lokaler PLLs der Objekte wird zwischen zwei Objekten (z.B. erster und zweiter Anker oder Funkknoten und Anker) mit bekannter Phasenbeziehung der gesendeten Signale und/oder PLLs, insbesondere jeweils relativ zu dem jeweils lokalen Zeitgeber des jeweilig sendenden der zwei Objekte, bevorzugt ebenfalls mit einem in-line phase return gearbeitet, wobei die zur Entfernungsbestimmung ansonsten genutzte Addition durch eine Subtraktion ersetzt wird. Dies ermöglicht eine besonders schnelle Ausführung der Synchronisation und/oder Ermittlung, insbesondere wenn der Abstand und/oder der/die Funksignalpfadlänge(n) zwischen den beiden Objekten bekannt ist. Bevorzugt wird dabei das übertragene Funksignal in Signalpfadanteile zerlegt und für die folgenden Bestimmungen immer ein oder mehrere Signalpfadanteile getrennt betrachtet, insbesondere einer oder mehrere dessen/deren Funksignalpfadlänge bekannt ist. Alternativ oder zusätzlich kann durch bekannte Verfahren versucht werden, Multipathing zu reduzieren, beispielsweise durch geeignete Auswahl der Frequenzen.

Sind beispielsweise die Phasenlagen jeweils relativ zu den lokalen Zeitgebern der zwei Objekte bekannt, also die Phasenlage der PLL oder der gesendeten Signale des ersten Objekts zum Zeitgeber am ersten Objekt und die Phasenlage der PLL oder der gesendeten Signale des zweiten Objekts zum Zeitgeber am zweiten Objekt bekannt, lässt sich auf einfache und schnelle Weise durch in-line Phase Return die Synchronisation der zwei Zeitgeber erreichen. Auch lässt sich damit die Frequenzabweichung der PLLs der zwei Objekte ermitteln.

Die Frequenzabweichung der PLLs der beiden Objekte untereinander (CFO crystal frequency offset), die direkt zur Frequenzsynchronisation genutzt werden kann, kann beispielsweise mittels der folgenden Vorgehensweise ermittelt werden:

$$CFO = \tfrac{1}{2} * dPhase(t2,t1) / (2*Pi) / (t2-t1),$$

wobei dPhase(t2,t1) die gemessene Änderung zwischen den Phasenverschiebungen zweier Antwortsignalen des zweiten Objekts ist, wobei das zweite Objekt diese zwei Antwortsignale auf die zum Zeitpunkt t1 und zum Zeitpunkt t2 des Zeitgebers am ersten Objekt am ersten Objekt gesendeten Signale gesendet hat (eins auf das zum Zeitpunkt t1 gesendete und eins auf das zum Zeitpunkt t2 gesendete) und diese zwei Antwortsignale am ersten Objekt empfangen wurden und, wobei das zweite Objekt beim Senden der Antwortsignale jeweils bereits die dort zuvor empfangene Phase der zu den Zeitpunkten t1 bzw. t2 gesendeten Signale von der an sich relativ zum Zeitgeber des zweiten Objekts bekannten Phasenlage subtrahiert hat. Dabei ist die Phasenverschiebung jeweils die durch den Funkkanal und/oder die Übertragung der Signale beim Rundlauf (jeweils ein Signal vom ersten Objekt zum zweiten und vom zweiten zum ersten) bewirkte Phasenverschiebung. Unter der Änderung der Phasenverschiebung ist dann die Änderung der Phasenverschiebung vom ersten (begonnen bei t1) Rundlauf zum zweiten (begonnen bei t2) Rundlauf zu verstehen.

Die Signale eines Rundlaufs weisen dabei vorteilhafterweise ähnliche, insbesondere näherungsweise identische oder identische Frequenzen auf. Näherungsweise identische Frequenzen liegen insbesondere dann vor, wenn sie auf Grund der vorliegenden Synchronisation als identisch gelten, ihre Abweichung nicht größer ist als die aktuelle CFO und/oder ihr Unterschied nicht mehr als 100 MHz beträgt.

Ein größerer Zeitabstand zwischen den Rundläufen und/oder t1 und t2 bringt eine größere Genauigkeit, ist also zu bevorzugen. Dabei ist auf die Eindeutigkeit bei (2 * Pi)/2 zu achten. Also abhängig davon, wie genau vor der Messung bereits die CFO bekannt war, kann der Zeitabstand der Rundläufe so optimiert werden, dass er groß gewählt wird, die Eindeutigkeit aber sicher gewahrt bleibt. In der Praxis haben sich, insbesondere bei einer bestehenden CFO von 100 Hz oder besser (niedriger), Zeitabstände zwischen t1 und t2 oder den Rundläufen im Bereich von 0,3 bis 50 ms bewährt, wobei bevorzugt nachfolgend weitere Messungen mit steigenden Zeitabständen durchgeführt werden, bei denen jeweils auf Basis der vorherigen Messung(en) erreichte Genauigkeiten berücksichtigt werden, um die Zeitabstände möglichst groß aber so festzulegen, dass die Eindeutigkeit gewahrt bleibt.

Dabei werden bevorzugt die Frequenzen der zum Zeitpunkt t1 und zum Zeitpunkt t2 des Zeitgebers am ersten Objekt gesendeten Signale identisch gewählt und die Frequenzen der Antwortsignale des zweiten Objekts auf das zum Zeitpunkt t1 gesendete Signale und auf das zum Zeitpunkt t2 des Zeitgebers am ersten Objekt gesendete Signal ebenfalls gleich, insbesondere auch näherungsweise gleich zu den Frequenzen der zum Zeitpunkt t1 und zum Zeitpunkt t2 des Zeitgebers am ersten Objekt gesendeten Signale, gewählt. Das bedeutet, dass sie insbesondere soweit angeglichen wurden, wie dies mit den zur Verfügung stehenden Informationen und Mitteln möglich war.

Bei entsprechender Genauigkeit der Zeitsynchronisation und bekanntem Abstand und/oder bekannte Signalpfadlänge kann das Verfahren auch unidirektional durchgeführt werden und sogar mit nur einem Signal auf einer Frequenz. Wird zu einem bekannten Zeitpunkt ein Signal mit einer Frequenz und bekannter Phasenlage am ersten Objekt abgestrahlt kann die erwartete Phasenlage am zweiten Objekt berechnet werden. Wird die reale Phasenlage gemessen, kann daraus die CFO berechnet werden. Allerdings spielen dann alle Fehler in Bezug auf die Signalpfadlänge und Zeitsynchronisation sowie Phasenmessung direkt in die Bestimmung der CFO. Daher wird dies insbesondere nur als Ergänzung einer erfindungsgemäßen Zeitsynchronisation eingesetzt.

Bevorzugt wird das Verfahren bei mehreren unterschiedlichen Frequenzen (z. B. fa und fb) zu unterschiedlichen Zeitpunkten (z. B. ta für den Beginn der Durchführung bei fa und tb für den Beginn der Durchführung bei der Frequenz fb; t1 ist dann insbesondere jeweils gleich ta) wiederholt. Bevorzugt weisen die Frequenzen gegenüber der Zeit der Durchführung (z.B. ta und tb) keine linearen Abstände oder eine nur geringe lineare Abhängigkeit, insbesondere von unter 10% auf. Eine geringer lineare Abhängigkeit ist insbesondere dann gegeben, wenn die zweidimensionalen Vektoren, jeweils aus Frequenz und Sendezeit, zueinander weniger als 10% linearen Anteil aufweisen. Dies ist beispielsweise jeweils paarweise unter zwei solchen Vektoren gegeben, wenn die Projektion des einen auf den anderen eine Länge von weniger als 10% der Länge des einen aufweist.

Es gilt also insbesondere mit fb - fa = Kab * (tb - ta) für verschiedene Paare fa und fb, dass Kab nicht für alle gleich Paare, insbesondere für alle Paare unterschiedlich, ist. In einer anderen bevorzugten, aber technisch anspruchsvolleren Ausführungsform erfolgt die Durchführung bei mehreren Frequenzen gleichzeitig.

Die Ermittlung des Zeitunterschiedes (dT), der dann direkt zur Synchronisation verwendet werden kann, kann beispielsweise mittels der folgenden Berechnung erfolgen:

$$dT = \tfrac{1}{2} * dPhase(f2,f1) / (2*Pi) / (f2-f1),$$

wobei dPhase die gemessene Veränderung zwischen den Phasenverschiebungen zweier Antwortsignale des zweiten Objekts ist, wobei das zweite Objekt diese zwei Antwortsignale auf die am ersten Objekt mit der Frequenz f1 und Frequenz f2 gesendeten Signale (erstes Signal bei f1, zweites Signal bei f2) gesendet hat und diese zwei Antwortsignale (eins auf das bei f1 mit näherungsweise ebenfalls Frequenz f1 und eins auf das bei f2 mit ebenfalls näherungsweise Frequenz f2) am ersten Objekt empfangen wurden und, wobei das zweite Objekt beim Senden der Antwortsignale jeweils bereits die dort zuvor empfangene Phase der vom ersten Objekt gesendeten Signale von der an sich relativ zum Zeitgeber des zweiten Objekts bekannten Phasenlage subtrahiert hat, also insbesondere die gesendete Phase der Antwortsignale jeweils um die negative empfangene Phase des jeweils zuvor empfangenen Signals gedreht hat. Dabei ist ein Antwortsignal das Antwortsignal, das auf das mit Frequenz f1 gesendete Signal gesendet wird und ein Antwortsignal das Antwortsignal, das auf das mit Frequenz f2 gesendete Signal gesendet wird.

Die Messung des Rundlaufs des ersten Signals bei f1 und des entsprechenden Antwortsignals und die Messung des Rundlaufs des zweiten Signals bei f2 und des entsprechenden Antwortsignals erfolgt vorteilhafterweise mit einem Zeitabstand, in dem der Kanal sich nicht relevant verändert hat, insbesondere zeitgleich. Auch führt ein CFO zu Abweichungen, wenn die Messungen nicht gleichzeitig erfolgen. Die Abweichung ist bei näherungsweise bekannter CFO zwar mathematisch herausrechenbar aber vorteilhafterweise wird diese vermieden oder klein gehalten. In der Praxis hat sich ein Zeitabstand von maximal 100 ms bewährt.

Mit Vorteil werden Signale zur Ermittlung der Frequenzabweichung und/oder Frequenzsynchronisation auch zur Ermittlung der Zeitdifferenz und/oder Zeitsynchronisation genutzt, oder umgekehrt. Dazu wird insbesondere ein Frequenzhopping, insbesondere mit nicht äquidistanten Frequenzabständen und/oder gegenüber der Sendezeit gering oder nicht linearen Frequenzabständen verwendet. Insbesondere handelte es sich somit um ein Verfahren einerseits zur Ermittlung der Frequenzabweichung und/oder Frequenzsynchronisation und andererseits auch zur Ermittlung der Zeitdifferenz und/oder Zeitsynchronisation.

Bevorzugt werden die Verfahren jeweils oder gemeinsam bei mehreren unterschiedlichen Frequenzpaaren (z. B. mehreren Paaren fa und fb) zu identischen oder unterschiedlichen Zeiten (z. B. ta1 für den Beginn der Durchführung bei fa1 und fb1 und ta2 für den Beginn der Durchführung bei den Frequenzen fa2 und fb2) wiederholt. Bevorzugt weisen die Frequenzen und/oder Frequenzdifferenzen gegenüber der Zeit der Durchführung eine geringe oder keine lineare Abhängigkeit auf.

Es gilt also insbesondere mit (fb1 - fa1)/(fb2 - fa2) = K1 2 * (ta1 - ta2) für verschiedene Paare von Paaren fan/fbn und fam/fbm, dass Knm nicht für alle gleich, insbesondere für alle Paare von Paaren unterschiedlich, ist.

In einer anderen bevorzugten, aber technisch anspruchsvolleren Ausführungsform erfolgt die Durchführung bei mehreren Paaren von Frequenzpaaren gleichzeitig.

Der Funksignalaustausch unter den Ankern zur Zeitsynchronisation erfolgt in einer bevorzugten Ausgestaltung, bei der eine, insbesondere im Verhältnis zur Zeit für die Ein- und Ausschaltung des Sendeverstärkers, schnelle Umschaltung zwischen den Abstrahlfrequenzen möglich ist, so, dass zunächst ein Objekt (z.B. erster Anker), insbesondere nacheinander, auf unterschiedlichen Frequenzen sendet und anschließend ein anderes Objekt (z.B. zweiter Anker), insbesondere nacheinander, auf unterschiedlichen Frequenzen sendet. Dadurch kann die benötigte Zeit reduziert werden.

Der Funksignalaustausch unter den Objekten zur Zeitsynchronisation erfolgt in einer anderen bevorzugten Ausgestaltung, bei der eine, insbesondere im Verhältnis zur Zeit für die Ein- und Ausschaltung des Sendeverstärkers, langsame Umschaltung zwischen den Abstrahlfrequenzen gegeben ist, so, dass die Objekte nacheinander jeweils nur ein Signal auf einer Frequenz senden, sich also immer abwechseln. Dadurch kann die benötigte Zeit reduziert werden.

In einer weiteren bevorzugten Ausgestaltung bei der die, insbesondere laufende, Zeitsynchronisation der Objekte/Anker, insbesondere nach einer initialen (ggf. auch willkürlichen) Zeitsynchronisation, bei und/oder während näherungsweise konstantem Funkkanal (Referenzkanal) (z.B. wenn sich bei und/oder während der Zeitsynchronisation die durchschnittliche Entfernung der übertragenen Energie des Funkkanals um weniger als 1m, insbesondere um weniger als 10cm, ändert und/oder die Zeitsynchronisation so durchgeführt wird, dass diese Bedingung gegeben ist) zwischen den Ankern funkbasiert erfolgen kann, wird diese bevorzugt so durchgeführt, dass mittels unidirektionalem Signalaustausch auf mehreren Frequenzen und auf Basis von Phasenmessungen an den ausgetauschten unidirektionalen Signalen die, insbesondere laufende, Zeitsynchronisation jeweils zwischen zwei Ankern, insbesondere mehrfach und/oder kontinuierlich wiederholt, erfolgt.

Dies kann beispielsweise mittels folgender Berechnung erfolgen:

Sind dPh(F2,F1) die an empfangenen unidirektionalen Signalen auf Frequenz F1 und F2, zum Beispiel vom ersten zum zweiten Anker, gemessene relative (also auf den Unterschied der Frequenzen F1 und F2 normierte) Änderung der (durch den Übertragungskanal bewirkten) Phasenverschiebung zwischen den zwei unidirektionalen Signalen bei F1 und F2, sei weiter ddPh((F2,F1),t2, t1) die relative Phasenverschiebungsdifferenz, also die um die Wirkung des Übertragungskanals korrigierte zum Zeitpunkt t2 gemessene Phasenverschiebung, also

$$\text{ddPh}((F2,F1),t2, t1) = \text{dPh}(F2,F1)(t2) - \text{dPh}(F2,F1)(t1)$$

mit dPh(F2,F1)(t2) als dPh(F2,F1) eines zum Zeitpunkt t1 und dPh(F2,F1)(t1) als dPh(F2,F1) eines zum Zeitpunkt t2 gesendeten oder empfangenen Signals,

dann ist ddPh() proportional zur Verschiebung dT der Zeitbasis zwischen den Objekten/Ankern zwischen den Zeitpunkten t1 und t2.

Also kann die Zeitverschiebung dT berechnet werden mit:

$$\text{dT} = \text{ddPh}((F2,F1),t2, t1) / (2*pi) / (F2-F1)$$

Es wird dazu also bevorzugt jeweils die Änderung der gemessenen Phasen, insbesondere Phasenverschiebungen, insbesondere auf einer Mehrzahl an Frequenzen, mit der "Referenzmessung" mit bekannter Zeitsynchronisation (t1) betrachtet. Durch die Messung auf unterschiedlichen Frequenzen, deren Abstand bevorzugt groß, insbesondere im Bereich von 50 - 500 MHz, gewählt wird, kann eine besonders fehlertollerante Bestimmung erfolgen, die insbesondere eine geringere Anforderung an die CFO und die vorher bestehende grobe Zeitsynchronisation stellt und dennoch recht zuverlässige die Mehrdeutigkeitsproblematik vermeidet, weil sozusagen virtuell eine Messung nur bei der Differenzfrequenz erfolgt. Erfolgt die Messung beispielsweise im 2,4GHz Band mit den Frequenzen 2400 und 2480 MHz beträgt die Differenz nur 80 MHz. Dann entsprechen 12ns 360° Phasendrehung, sodass bei einer Genauigkeit der Phasenmessung im Bereich von + /-3 bis 6° eine recht gute Zeitsynchronisation erreicht werden kann und dies bei nur geringen Anforderungen in Bezug auf die Vermeidung von Mehrdeutigkeitsproblemen bzgl. der Phasenlage.

Die Änderungsrate der Zeitsynchronisation von der Zeit t1 zu der Zeit t2 ist dann:

$$\text{ddT} = \text{dPh zur Zeit 2} - \text{dPh zur Zeit 1} = \text{ddPh}((F2,F1),t2,\ t1)/(t2 - t1).$$

ddPh((F2,F1),t2, t1) kann auch ersetzt werden durch eine Mittelung aus mehreren ddPh((Fn,Fm),t2, t1) mit mehreren Frequenzpaaren Fn,Fm. Dies kann die Genauigkeit erhöhen.

ddPh ist also die Änderung der am zweiten Objekt gemessenen Phasenverschiebung (jeweils zuvor um die durch den Übertragungskanal bedingte Phasenverschiebung bereinigt) zwischen am zweiten Objekt empfangenen Signalen, die zum Zeitpunkt t1 und t2 am ersten Objekt gesendet wurden.

Bei ausreichender Genauigkeit der Messanordnung, insbesondere ausreichend genau bekannter Signalpfadlänge, ausreichend kleiner CFO und ausreichend genauer Phasenmessung kann auch eine einfache Ermittlung der Zeitabweichung mittels eines unidirektionalen Signals erfolgen. Wir bei einer Frequenz ein Signal mit bekannter Phasenlage vom ersten Objekt abgestrahlt und am zweiten Objekt dessen Phasenlage bestimmt, kann diese mit der erwarteten Phasenlage verglichen werden und aus der Abweichung direkt dT bestimmt werden. Dies erfordert, insbesondere bei hohen Frequenzen, aber hohe Anforderungen an die Genauigkeit, um die Mehrdeutigkeit zu vermeiden.

Ausreichend genau ist dann gegeben, wenn die Mehrdeutigkeit der Phasenmessung sicher vermieden werden kann. Dies lässt sich anhand der verwendeten Frequenz mathematisch bestimmen.

Generell liegen die in diesem Text verwendeten Frequenzen bevorzugt über 2 GHz. Dadurch ist eine hohe Genauigkeit zu erreichen und können vorhandene Transmitter, beispielsweise Bluetooth, Wlan une/oder Mobilfunk, z.B. LTE, verwendet werden.

Mit Vorteil wird der Abstand zwischen den Ankern/Objekten und/oder deren relative Position mittels funkbasierter Entfernungsmessungen zwischen jeweils zwei der Anker/Objekte bestimmt. Dadurch kann vollständig auf andere Messmethoden, beispielsweise manuelle oder lichtbasierte, verzichtet werden. Dies reduziert den apparativen Aufwand. Zudem ermöglicht es die schnelle und einfache Errichtung von, beispielsweise ad hoc, Ankernetzen. Dies kann beispielsweise in Notsituationen hilfreich sein, um einen Funkknoten, beispielsweise ein Handy aufzuspüren. So kann eine Gruppe von Personen, die jeder einen Funkknoten, beispielsweise in Form eines Mobiltelefons, mitführen, bei dem Verlust oder der Verschüttung einer der Personen durch die Funkknoten der verbleibenden Personen ein Ankernetz aufbauen und zeitnah der Funkknoten der verlorenen oder verschütteten Person lokalisiert werden. Dazu und generell können die Funkknoten beispielsweise ihre relative Position mittels GPS und/oder funkbasierten Entfernungsmessung bestimmen. Auch kann nach einer ersten Bestimmung die Position einiger oder aller Anker angepasst werden, um die Bestimmung in einer weiteren Durchführung des Verfahrens zu verbessern. Dadurch lässt sich sehr schnell und zuverlässig eine genaue Ortung realisieren. Dazu wird die Lage der Anker insbesondere iterativ so verändert, dass sie um den zu ortenden Funkknoten, insbesondere gleichmäßig, herum angeordnet werden. Dazu können sich einige oder alle Anker jeweils zwischen Messungen, insbesondere von verschiedenen Seiten, auf die ungefähre Position zu bewegen unter Einhaltung eines, insbesondere vorbestimmten, Mindestabstandes der Anker zueinander von z. B. 2m.

Bevorzugt wird es, wenn die Anker die Phase der abgestrahlten Signale basierend auf einem Zeitunterschied zwischen den Ankern so anpassen, dass die Signale der Anker kohärent abgestrahlt erscheinen. In einer einfachen Ausgestaltung senden die Anker ihre Signale an relativ zu ihrem jeweiligen lokalen Zeitgeber festgelegten Zeiten, das führt auch bei einer Zeitsynchronisation zu Abweichungen auf Grund von Drift. Aber auch auf Grund von bekannten Phasensprüngen beim Umschalten und auch durch Unterschiedliche Phasenlagen der Abstrahlung unterschiedlicher Anker kann sich ein von außen betrachtet ein nicht kohärentes Ankersystem zeigen. Dies kann durch geringfügige Änderung der Umschaltungszeitpunkte so verändert werden, dass das Ankersystem von außen, zumindest ab einem gewissen Abstand von jedem Anker, kohärent erscheint. Dadurch lassen sich dann notwendige Berechnungen vereinfachen.

Mit besonderem Vorteil für die einfache Installation sind die oder manche Anker Bestandteil von, insbesondere ortsfesten, Lautsprechern und/oder Lampen und/oder sonstiger in Gebäuden oder Zimmern installierter oder betriebener elektrischer Infrastruktur (auch: Steckdosen, Schalter, Rauchmelder etc.).

Mit Vorteil für die Genauigkeit und Robustheit des Verfahrens kommuniziert der Funkknoten (ein Objekt) mit den mindestens zwei Ankern (jeweils auch ein Objekt) jeweils über mehrere Antennenpfade und/oder kommunizieren die Anker, oder abstrakt jeweils zwei Objekte, untereinander paarweise jeweils über mehrere Antennenpfade. Ein Antennenpfad ist insbesondere der Funkkanal von einer ersten Sendeantenne zu einer ersten Empfangsantenne. Werden zum Empfang beispielsweise zwei Antennen, beispielsweise eines Objekts, z. B. eines Ankers, verwendet und die damit empfangenen Signale separat ausgewertet, werden zwei Antennenpfade genutzt. Wird dann, zum Beispiel zeitlich nachgelagert, auch eine zweite Sendeantenne, zum Beispiel des Funkknotens, verwendet und jeweils mit den beiden Empfangsantennen empfangen, werden vier Antennenpfade verwendet.

In bestimmten Anwendungsfällen wird es bevorzugt, ein Ankernetz aus mobilen Geräten ad hoc aufzubauen und dass die Anker insbesondere zunächst Informationen zu ihrer relativen Anordnung bestimmen und dazu Frequenzen und/oder Zeiten synchronisieren, dies insbesondere wiederholt tun. So kann schnell ein solides Ankernetz und eine Bestimmung durchgeführt werden, dies ist mit aktiven und/oder passiven Funkknoten möglich.

Generell wird es je nach Anwendungsfall bevorzugt mit aktiven und/oder passivem Funkknoten zu arbeiten. Passive Funkknoten sind zum Beispiel von Vorteil, wenn eine hohe Anzahl von Funkknoten zeitgleich verwendet wird und/oder der/die Funkknoten anonym und/oder unerkannt bleiben soll(en). Der Einsatz von aktiven Funkknoten kann von Vorteil sein, wenn diese möglichst wenig elektrische Leistung verbrauchen sollen, also nur kurz senden und nicht lange empfangen. Die Kombination von aktiven und passiven Bestimmungen bezüglich eines Funkknotens kann die Vorteile beider Varianten nutzen.

Die Zeitsynchronisation und/oder Ermittlung einer Abweichung zwischen Zeitgebern, aber alternativ oder zusätzlich auch zur Frequenzsynchronisation und/oder Ermittlung einer Frequenzabweichung lokaler PLLs der Objekte kann vorteilhafterweise im Rahmen eines nachfolgend geschilderten Verfahrens zum Einsatz kommen, bevorzugt ebenfalls mit einem in-line phase return gearbeitet, wobei die Subtraktion durch eine Addition ersetzt wird.

Zudem kann über einseitiges Ranging die notwendige Kommunikation weiter reduziert werden. Ausreichend ist es, wenn eine einseitige Übertragung mit Frequenzwechsel vom Funkknoten zu mindestens zwei Ankern oder von mindestens zwei Ankern zum Funkknoten durchgeführt wird. Dabei kann im Gegensatz zum bekannten einseitigen Ranging zwischen einem aktiven und einem passiven Objekt auf die Zeitsynchronisation zwischen aktiven und passiven Objekten verzichtet werden, wenn entweder zwei zeitsynchronisierte aktive Objekte oder ein aktives und zwei zeitsynchronisierte passive Objekte verwendet werden.Gelöst wird diese Aufgabe durch ein Verfahren, ein Ankernetz sowie ein Ankernetz zusammen mit mindestens einem, insbesondere einer Vielzahl von, aktiven und/oder passiven Funkknoten, eingerichtet zur Durchführung des Verfahrens. Dazu weist insbesondere jeder Anker und jeder Funkknoten eine Steuereinheit, eine Sende- und/oder Empfangsvorrichtung auf.

Das erfindungsgemäße Verfahren beinhaltet vorteilhafterweise die Bestimmung einer Position und/oder einer Richtung und/oder einer Entfernungsdifferenz eines aktiven und/oder passiven Funkknotens zumindest relativ zu einem Ankernetz umfassend mindestens zwei Anker, wobei die mindestens zwei Anker über eine Zeitsynchronisation untereinander oder gegenüber einem gemeinsamen Zeitgeber verfügen.

Das erfindungsgemäße Verfahren wird insbesondere in Innenräumen, bei Entfernungen zwischen den zwei Objekten, insbesondere zwischen Anker und Funcknoten, von unter zwei Kilometern, insbesondere unter 200 m, und/oder bei während der Durchführung des Verfahrens oder zumindest während der Signallaufzeit eines Signals zwischen Anker und Funkknoten näherungsweise unveränderten Funkkanaleigenschaften angewandt.

Mit besonderem Vorteil wird das Verfahren bezüglich einer Vielzahl von Funkknoten angewandt, insbesondere mehr als 20 Funkknoten, und/oder zum Tracking einer Vielzahl von Funkknoten verwendet und/oder bezüglich einer Vielzahl von Ankern, insbesondere mindestens fünf, insbesondere einer Vielzahl von Ankerpaaren, angewandt.

Dazu ist es besonders bevorzugt, das Verfahren während der Entfernungsmessung mittels passiven Funkknoten, insbesondere Funkknotenpaare, durchzuführen. Als passive Funkknoten werden insbesondere solche Verstanden, die keine Signale zur Entfernung- oder Entfernungsdifferenzmessung aussenden. Dies bedeutet nicht, dass die Funkknoten nicht beispielsweise Messergebnisse per Funk übertragen und/oder zu anderen Zwecken, wie der Zeitsynchronisation, Frequenzanpassung und/oder Ermittlung entsprechender Abweichungen, kommunizieren. So wäre insbesondere beispielsweise ein Mobiltelefon, dass sich relativ zum Ankernetz passiv ortet, wie dies beispielsweise bei GPS-Ortung der Fall ist, aber beispielsweise eine Datenverbindung zum Empfang und Versand von Nutzdaten unterhält und per Funk einer Zeitsynchronisation durchführt, in diesem Sinne passiv.

Erfindungsgemäß senden der Funkknoten und/oder die mindestens zwei Anker des Ankernetzes jeweils Funksignale zur Zeitsynchronisation und/oder Ortungsfunksignale aus und wechseln dabei zwischen mindestens zwei, insbesondere zwischen mindestens fünf, Frequenzen, wobei die Phasenbeziehung der Signale vor und nach einem Wechsel bekannt ist. Dies kann durch Messung der Beziehung oder durch andere Vorkehrungen, durch die die Beziehung bekannt ist, geschehen. So kann beispielsweise ohne Phasensprung geschaltet werden.

Vorteilhafterweise wird die Richtung, Position und/oder einer Entfernungsdifferenz, insbesondere ausschließlich, auf Basis

- gemessener Phase oder Phase und Amplitude empfangener Ortungsfunksignale und
- der bekannten Phasenbeziehung und

- Information zum Zeitversatz der Frequenzwechsel zwischen den Anken sowie zu den Frequenzen und, je nach Ausführung des Verfahrens zusätzlich Information zur zumindest relativen Position und/oder zum Abstand der mindestens zwei Anker des Ankernetzes untereinander

bestimmt.

Das Besondere daran ist, dass auch ohne Zeitsynchronisation zwischen auf der einen Seite Funkknoten und auf der anderen Seite Ankernetz, eine Bestimmung der Entfernungsdifferenz zwischen den Entfernungen vom Funkknoten zu den einzelnen Ankern möglich ist und dies sogar mit nur unidirektionalem Signalaustausch zwischen auf der einen Seite Funkknoten und auf der anderen Seite Ankernetz. Dies ermöglicht nicht nur "passive" Funkknoten, sondern die gleichzeitige Bestimmung bezüglich vieler und/oder durch viele Funkknoten, sowie auch kurze Messzeiten.

Aus den Entfernungsdifferenzen lassen sich dann zusammen mit weiteren Informationen, wie beispielsweise dem Abstand zwischen den Ankern, weitere Aussagen, wie beispielsweise Richtung zum Funkknoten, Entfernung und/oder Position des Funkknotens bestimmen. Die Bestimmungen können dabei im Ankernetz, im Funkknoten und/oder einer externen Recheneinheit vorgenommen werden.

Die Objekte, insbesondere Anker, können beispielsweise ihre Signale auf den Frequenzen $f1,1$ bis $f1,n$ für Anker 1 mit den Frequenzen 1 bis n und analog für die weiteren x Objekte, also $f1,1$ bis $fx,n$ aussenden, dabei können die Frequenzen 1 bis n der Anker zumindest näherungsweise identisch sein, so dass man verkürzt und angenähert von den Frequenzen $f1$ bis $fn$ sprechen kann. Näherungsweise identische Frequenzen liegen insbesondere dann vor, wenn sie auf Grund der vorliegenden Synchronisation als identisch gelten, ihre Abweichung nicht größer ist als die aktuelle CFO und/oder ihr Unterschied nicht mehr als 100 MHz beträgt.

Zwischen den Frequenzen können die Objekte zu den Zeitpunkten $t1,2$ bis $tx,n$ umschalten, wobei mit $t1,2$ die Umschaltung des Objekts1 von der ersten auf die zweite Frequenz gemeint ist.

Dabei kommt es nicht auf absolute Zeiten an, sondern können diese relativ zu einer beliebigen Zeit, beispielsweise im Ankernetz, gegeben sein, zu dem der Funcknoten keine Synchronisation aufweisen muss.

Es kann aber auch, alternativ oder zusätzlich, der Funkknoten Signale auf den Frequenzen $f1$ bis $fn$ mit den Frequenzen $f1$ bis $fn$ aussenden.

Zwischen den Frequenzen kann der Funkkoten zu den Zeitpunkten $t1,2$ bis $t1,n$ umschalten, wobei $t1,2$ die Umschaltung des Funkknotens 1 von der ersten auf die zweite Frequenz gemeint ist.

Dabei kommt es nicht auf absolute Zeiten an, sondern können diese relativ zu einer beliebigen Zeit, beispielsweise im Funkknoten, gegeben sein, zu dem das Ankernetz keine Synchronisation aufweisen muss.

Die Abstrahlung der Signale auf verschiedenen Frequenzen, aber auch die Umschaltung, kann mit oder ohne Unterbrechung erfolgen. Es kommt nur darauf an, dass die Phasenlage der Signale zueinander vor und nach dem Umschalten der Frequenz bekannt ist, dazu bedarf es einer Information zum Zeitpunkt einer, gegebenenfalls virtuellen, Umschaltung und der relativen Phasenlage vor und nach dem Umschalten. Ein und dieselbe physikalische Abfolge bei Abstrahlung mit Unterbrechung während der Umschaltung, kann somit mit unterschiedlichen Kombinationen von relativer Phasenlage und Umschaltzeitpunkt (innerhalb der Unterbrechung) angegeben werden.

Vorteilhafterweise wird wie folgt gearbeitet: Sendet der Funkknoten (beispielsweise erstes Objekt), ist der Anker (beispielsweise zweites Objekt) und/oder sind die Anker (beispielsweise zweite Objekte) Empfänger; senden die Anker, ist der Funkknoten Empfänger. Der/die Empfänger empfangt/en die Signale mit unterschiedlichen Frequenzen und messen deren Phasenlage oder deren Amplitude und Phasenlage. Die Phasenlagen können beispielsweise bezeichnet werden mit $phi1,1$ bis $phix,n$. Senden die Anker misst der Funkknoten an den Signalen der Anker 1 bis x jeweils auf deren Frequenzen 1 bis n, sendet der Funkknoten messen die Anker 1 bis x jeweils an den Signalen des Funkknoten auf den Frequenzen 1 bis n.

Die Berechnung kann beispielsweise wie folgt erfolgen:

1. Berechne die Entfernung zwischen Anker 1 und Funkknoten als wären beide zeitlich synchronisiert.
2. Berechne die Entfernung zwischen Anker 2 und Funkknoten als wären beide zeitlich synchronisiert.
3. Berechne die Entfernungsdifferenz, dabei fällt die "unbekannte"/ungenaue Zeitdifferenz heraus.

In Multipathing-Umgebungen kann vorteilhafterweise mittels FFT und/oder hochauflösender Verfahren wie MUSIC oder CAPON der kürzeste Signalpfad (die kürzeste im Signal erkennbare Entfernung) gesucht werden. Diese kürzesten Entfernungen werden dann subtrahiert. Dazu werden insbesondere mittels FFT und/oder hochauflösender Verfahren jeweils die Signalanteile des kürzesten Pfads zwischen einem Anker und dem Funkknoten isoliert und darauf basierend die jeweilige Entfernung bestimmt.

Es kann auch ein Winkel, also eine relative Orientierung, des Funkknotens zur Verbindungslinie zwischen zwei Ankern bestimmt werden.

Gelöst wird die Aufgabe auch durch ein Ankernetz umfassend mindestens zwei Anker, wobei die mindesten zwei Anker über eine Zeitsynchronisation untereinander oder gegenüber einem gemeinsamen Zeitgeber verfügen bzw.

nach dem beschriebenen Verfahren durchführen. Die Anker weisen dabei insbesondere Mittel zum Empfang und/oder Senden von Funksignalen auf. Das Ankernetz weist des Weiteren mindestens eine Steuereinheit auf, die eingerichtet ist, die Anker zur Durchführung des, insbesondere ankerseitigen Teils des, Verfahrens zu steuern.

Gelöst wird die Aufgabe auch durch ein System aus einem Ankernetz und mindestens einem, insbesondere einer Vielzahl von, Funkknoten. Der/Die Funkknoten weist/en dabei insbesondere Mittel zum Empfang und/oder Senden von Funksignalen auf. Der/die Funkknoten weist/weisen des Weiteren jeweils mindestens eine Steuereinheit auf, die eingerichtet ist, den jeweiligen Funkknoten zur Durchführung des, insbesondere funkknotenseitigen Teil des, Verfahrens zu steuern.

Des Weiteren weist das Ankernetz oder das System bevorzugt eine Recheneinheit auf, um die Position und/oder Richtung und/oder Entfernungsdifferenz zu bestimmen. Die Recheneinheit kann Teil der Anker und/oder des Funkknotens sein.

Die Anker sind insbesondere zumindest für die Dauer des Signalaustauschs für eine Bestimmung einer Entfernungsdifferenz näherungsweise oder vollständig ortsfest. Dies kann beispielsweise durch Fixierung der Anker an festen Strukturen oder durch Ablegen der Anker auf festen Strukturen erfolgen. Aber auch das ruhige Halten in menschlichen Händen kann beispielsweise die Anforderung ausreichend erfüllen. Insbesondere kann auch die Konsistenz der Messung dadurch bestimmt werden, dass die Anker vor und nach dem Signalaustausch ihre Entfernungen und/oder Positionen bestimmten und diese vergleichen werden. Für die Genauigkeit oder Konsistenz kann eine Metrik bestimmt werden, beispielsweise auf Basis der Abweichungen der Entfernungen und/oder Positionen vor und nach dem Signalaustausch.

Bevorzugt wird an den empfangenen Signalen eine Kanalanalyse durchgeführt, um den Signalanteil des, auf Grund der Kanalanalyse vermuteten, kürzesten Signalpfads zu bestimmen und wird insbesondere die Phasen und/oder Amplitudenmessung insbesondere nur dieses Signalanteils verwendet. Die Kanalanalyse kann z.B. durch eine FFT durchgeführt werden, wobei insbesondere im erhaltenen Pseudospektrum das erste relevante Maximum gesucht wird und als kürzester Signalpfad angenommen wird.

Es kann auch mittels FFT und/oder hochauflösender Verfahren wie MUSIC oder CAPON der kürzeste Signalpfad (die kürzeste im Signal erkennbare Entfernung) gesucht werden. Dazu werden insbesondere mittels FFT und/oder hochauflösender Verfahren jeweils die Signalanteile des kürzesten Pfads zwischen den zwei Objekten (insbesondere jeweils Sender und Empfänger) isoliert und nur diese zur weiteren Verwendung, insbesondere Phasenmessung, herangezogen.

Mit besonderem Vorteil wird die Änderung der Phasenverschiebung bei einem Frequenzwechsel oder deren Verhältnis zur Frequenzdifferenz des Frequenzwechsels verwendet. Die absolute Phasenlage ist daher nicht erforderlich.

Eine Zeitverschiebung wird in allen Messungen zwischen Ankernetz und Funcknoten trotz Zeitsynchronisation vorhanden sein und hebt sich somit bei der Bestimmung der Entfernungsdifferenz auf. Auch eine Drift dieser Zeitverschiebung aufgrund unterschiedlich schneller Uhren/Quarze im Funkknoten und Ankernetz kann erkannt und korrigiert werden. Es wird bevorzugt, wenn die Signale zur Bestimmung einer Entfernungsdifferenz in einem Zeitfenster ausgetauscht werden ist, das so klein ist, dass der (relative) Drift der Uhren in Ankernetz und Funkknoten näherungsweise konstant ist und/oder der aus der Änderung der Drift resultierende Fehler in dem Zeitfenster insb. kleiner als 3ns, insbesondere kleiner als 0,3ns, ausfällt.

Die Zeitsynchronisation innerhalb des Ankernetzes kann auf verschiedene Arten erfolgen. So sind Synchronisationen allein unter den Ankern oder gegen einen weiteren Zeitgeber möglich.

Die folgenden Ausführungen erläutern die Erfindungen rein exemplarisch anhand der rein schematischen Figuren. Dabei zeigen die Figuren:

Fig. 1     eine Veranschaulichung eines Ankernetzes und eines aktiven Funkkotens;

Fig. 2     eine Veranschaulichung eines Ankernetzes und eines passiven Funkkotens und

Fig. 3     eine Veranschaulichung einer Zeitsynchronisation mittels in-line phase return.

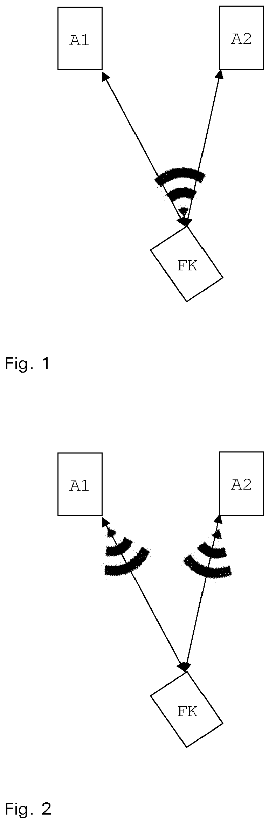

Figur 1 zeigt ein Ankernetz mit zwei Ankern A1, A2 mit fester Positionierung und bekanntem Abstand. Der Funkknoten FK sendet unidirektionale Signale, die von den Ankern A1, A2 empfangen werden. Daraus wird die Differenz der durch Doppelpfeile dargestellten Entfernungen bestimmt. Wir das Verfahren mit mehreren Ankern, beispielsweise drei oder vier, durchgeführt und sind deren Positionen bekannt, lässt sich dadurch 2- oder 3-dimensional die Position des Funkknotens bestimmen.

Figur 2 zeigt ein Ankernetz mit zwei Ankern A1, A2 und einen passiven Funcknoten FK, der die unidirektionalen Signale der Anker A1, A2 empfängt und die Differenz der durch Doppelpfeile dargestellten Entfernungen bestimmt. Wir das Verfahren mit mehreren Ankern, beispielsweise drei oder vier, durchgeführt und sind deren Positionen bekannt, lässt sich dadurch 2- oder 3-dimensional die Position des Funkknotens bestimmen.

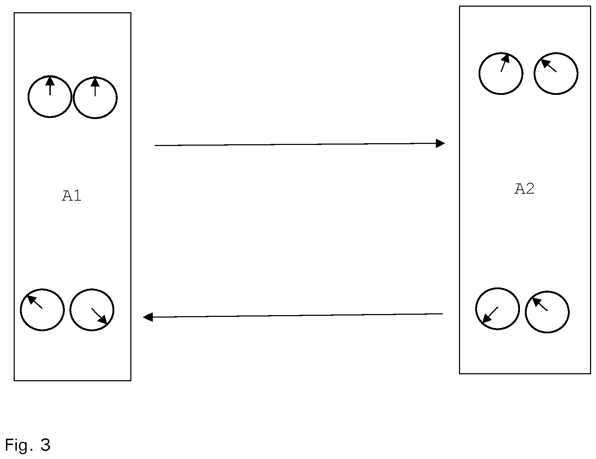

Figur 3 zeigt eine Veranschaulichung der Zeitsynchronisation mittels in-line phase return zwischen zwei Objekten A1, A2, die Anker eines Ankernetzes sein können. Die Objekte verfügen jeweils über lokale Zeitgeber und jeweils über eine PLL, die bevorzugt auf näherungsweise gleiche Frequenzen eingestellt sind, deren Phasenlage jeweils gegenüber dem jeweiligen lokalen Zeitgeber des Objekts bekannt ist, hier vereinfacht als identisch angenommen wird und deren Phase für jeden Anker jeweils zu zwei Zeiten Ta, Td für Objekt A1 bzw. Tb, Tc für Objekt A2 durch Zeiger in einem Kreis, jeweils der äußere Kreis, gezeigt sind. Die Zeiger in den inneren Kreisen (A1 rechts, A2 links) zeigen die Phase eines Signals. Die Pfeile zwischen den Objekten verdeutlichen Signale, und zwar der obere ein erstes vom ersten Objekt A1 zum zweiten Objekt A2 und der untere ein zweites vom zweiten Objekt A2 zum ersten Objekt A1. Das erste Objekt sendet zum Zeitpunkt Ta beginnend ein Signal mit der Phasenlage der internen PLL, daher sind die Zeiger identisch. Dieser Signalanfang wird zum Zeitpunkt Tb am zweiten Objekt empfangen, mit einer Phasenlage, die durch den oberen linken Zeiger angezeigt wird, während die interne PLL des zweiten Objekts A2 die durch den Zeiger oben rechts verdeutlichte Phase aufweist. Das zweite Objekt beginnt zum Zeitpunkt Tc, der hier zur vereinfachten Darstellung näherungsweise gleich Tb angenommen wurde, das zweite Signal zu senden. Dieses Signal würde ohne in-line phase return mit der Phase der PLL gesendet. Für den in-line phase return wird es nun aber um die negierte Abweichung des empfangenen ersten Signals zur PLL des zweiten Objekts verdreht und somit mit abweichender und durch den unteren linken Zeiger im zweiten Objekt veranschaulichten Phasenlage beginnend gesendet. Das erste Objekt empfängt das Signal und bestimmt die Phasenlage des Signalbeginns gegenüber seiner eigenen PLL. Daraus kann es zusammen mit der Phase des Sendebeginns des ersten Signals die Phasenverschiebung durch den Funkkanal des Rundlaufes bestimmen.

Ist die Entfernung konstant und bekannt, kann die relative Veränderung der Zeitgeber der Objekte bestimmt werden. Ist die Entfernung konstant kann durch Wiederholung die Abweichung der Zeitgeber der Objekte bestimmt werden. Denn die am ersten Objekt am zweiten Signal bestimmte Phasenlage kann mit der berechneten Phasenlage bei synchronen Zeitgeber verglichen werden. Dadurch kann die Abweichung der Zeitgeber bestimmt werden.

## Patentansprüche

1.  Verfahren zur Zeitsynchronisation, Frequenzsynchronisation und/oder Ermittlung einer Zeitdifferenz und/oder Frequenzabweichung zwischen einem ersten und einem zweiten Objekt, wobei die Objekte jeweils mindestens einen lokalen Zeitgeber und jeweils mindestens eine PLL aufweisen und jeweils die relative Phasenlage zweier Signale unterschiedlicher Frequenz mittels der PLL eines Objekts in Abhängigkeit zu der Zeitdifferenz der Erzeugung oder Abstrahlung der zwei Signale an einem der Objekte relativ zu seinem Zeitgeber bekannt ist und/oder die Phasenlage der PLL jedes der Objekte bei unterschiedlichen Frequenzen jeweils relativ zu seinem Zeitgeber bekannt ist, wobei die Zeitsynchronisation, Frequenzsynchronisation und/oder Ermittlung zwischen den Objekten funkbasiert mittels Phasenmessung(en) an einer Mehrzahl von zwischen den zwei Objekten übertragenen Signalen, insbesondere Funksignalen, unterschiedlicher Frequenz durchgeführt wird.

2.  Verfahren nach Anspruch 1, wobei die Zeitsynchronisation und/oder Ermittlung der Zeitdifferenz mittels Bestimmung von Phasenverschiebung der Übertragung von Hinwegsignal vom ersten zum zweiten Objekt und Rückwegsignal vom zweiten zum ersten Objekt mittels in-line phase return durchgeführt wird.

3.  Verfahren nach Anspruch 2, wobei der in-line phase return dadurch realisiert wird, dass die Phasenlage des Rückwegsignals gegenüber einer gegenüber dem lokalen Zeitgeber des zweiten Objekts bekannten Phasenlage, insbesondere der Phasenlage seiner PLL, um die negierte gemessene Phase des am zweiten Objekts empfangenen Hinwegsignals am zweiten Objekts verändert wird.

4.  Verfahren nach Anspruch 3, wobei mehrfach Hin- und Rückwegsignale mit in-line phase return ausgetauscht werden, insbesondere bei unterschiedlichen Frequenzen.

5.  Verfahren nach Anspruch 1 bis 4, wobei eine Zeitsynchronisation und/oder Ermittlung der Zeitdifferenz erfolgt und wobei die Phasenlage des am ersten Objekts empfangenen zweiten Signals am ersten Objekt bestimmt wird und zusammen mit der Phasenlage des ersten Signals am ersten Objekt gegenüber der PLL des ersten Objekts, insbesondere der Unterschied der Phasenlagen, zur Zeitsynchronisation verwendet wird, insbesondere die Änderung des Unterschieds zwischen zwei auf unterschiedlichen Frequenzen ausgetauschten Hin- und Rückwegsignalpaaren als Maß für die relative Änderung der lokalen Zeitgeber, insbesondere als deren relative Änderung verwendet wird.

6.  Verfahren nach Anspruch 1, wobei die Zeitsynchronisation und/oder Ermittlung der Zeitdifferenz, insbesondere bei Kenntnis der Entfernung zwischen den Objekten, funkbasiert mittels, insbesondere bei unterschiedlichen Frequenzen wiederholtem, insbesondere ausschließlich, unidirektionalem Signalaustausch vom ersten zum zweiten Objekt, insbesondere auf mehreren Frequenzen, und auf Basis von Phasenmessung(en) an den oder dem am zweiten Objekt empfangenen Signal(en) erfolgt, insbesondere wobei die Phasenlage des am zweiten Objekts empfangenen unidirektionalen Signals des ersten Objekts am zweiten Objekt bestimmt wird und die Phasenlage des ersten Signals am zweiten Objekt gegenüber der PLL des zweiten Objekts, insbesondere der Unterschied zu einer rechnerisch bei gleichen Uhren erwarteten Phasenlagen, zur Zeitsynchronisation verwendet wird.

7. Verfahren nach einem der Ansprüche 1 bis 6, wobei das Verfahren während und/oder bei näherungsweise unverändertem Funkkanal oder bei näherungsweise bekanntem Funkkanal, Abstand und/oder näherungsweise bekannter Signalpfadlänge durchgeführt wird.

8. Verfahren nach Anspruch 6 oder 7, wobei die an empfangenen unidirektionalen Signalen auf einer ersten und einer zweiten Frequenz gemessene relative, also auf den Unterschied zwischen der ersten und zweiten Frequenz normierte, Differenz der durch die Übertragungen bewirkten Phasenverschiebungen zwischen den zwei unidirektionalen Signalen bei der ersten und zweiten Frequenz zur Zeitsynchronisation, insbesondere als Maß der Abweichung der lokalen Zeitgeber verwendet, insbesondere mit dem Proportionalitätsfaktor zwei Pi multipliziert als die Abweichung der lokalen Zeitgeber verwendet wird.

9. Verfahren nach einem der Ansprüche 1 bis 5, wobei die Frequenzsynchronisation und/oder Ermittlung der Frequenzabweichung mittels Bestimmung von Phasenverschiebung der Übertragung von Hinwegsignal vom ersten zum zweiten Objekt und Rückwegsignal vom zweiten zum ersten Objekt mittels in-line phase return durchgeführt wird, wobei insbesondere der in-line phase return dadurch realisiert wird, dass die Phasenlage des Rückwegsignals gegenüber einer gegenüber dem lokalen Zeitgeber des zweiten Objekts bekannten Phasenlage, insbesondere der Phasenlage seiner PLL, um die negierte gemessene Phase des am zweiten Objekts empfangenen Hinwegsignals am zweiten Objekts verändert wird.

10. Verfahren nach Anspruch 9, wobei mehrfach Hin- und Rückwegsignale mit in-line phase return ausgetauscht werden.

11. Verfahren nach einem der Ansprüche 9 bis 10, wobei die Phasenlage des am ersten Objekts empfangenen zweiten Signals am ersten Objekt bestimmt wird und zusammen mit der Phasenlage des ersten Signals am ersten Objekt gegenüber der PLL des ersten Objekts, insbesondere der Unterschied der Phasenlagen, zur Frequenzsynchronisation und/oder Ermittlung verwendet wird, insbesondere die Änderung des Unterschieds zwischen zwei zu unterschiedlichen Zeiten und insbesondere, zumindest näherungsweise, identischen Frequenzen, ausgetauschten Hin- und Rückwegsignalpaaren als Maß für die Frequenzabweichung verwendet wird.

12. Verfahren nach einem der Ansprüche 1 bis 11, wobei die Frequenzsynchronisation und/oder Ermittlung der Frequenzabweichung, insbesondere bei Kenntnis der relativen Bewegung, insbesondere Stillstand, zwischen den Objekten, funkbasiert mittels unidirektionalem Signalaustausch vom ersten zum zweiten Objekt, insbesondere zu mehreren Zeiten, und auf Basis von Phasenmessung(en) an den oder dem am zweiten Objekt empfangenen Signal(en) erfolgt.

13. Verfahren nach einem der Ansprüche 1 bis 12, wobei das Verfahren während und/oder bei näherungsweise unverändertem Funkkanal oder bei näherungsweise bekanntem Funkkanal, Abstand und/oder näherungsweise bekannter Signalpfadlänge durchgeführt wird.

14. Verfahren nach einem der Ansprüche 1 bis 15, wobei die zu zwei unterschiedlichen Zeiten an empfangenen unidirektionalen Signalen, also erste und zweite Zeit, gemessenen relative, also auf die Differenz der ersten und zweiten Zeiten normierte, Differenz der durch die Übertragungen bewirkten Phasenverschiebungen zwischen den zwei unidirektionalen Signalen zur ersten und zweiten Zeit als Maß der Abweichung der PLLs der zwei Objekte, insbesondere als die Abweichung der lokalen PLLs der Objekte verwendet wird.

15. Verfahren nach einem der Ansprüche 1 bis 14, wobei die Phasenlage des am zweiten Objekts empfangenen unidirektionalen Signals des ersten Objekts am zweiten Objekt bestimmt wird und die Phasenlage des ersten Signals am zweiten Objekt gegenüber der PLL des zweiten Objekts, insbesondere der Unterschied zu einer rechnerisch bei gleichen Frequenzen der PLLs der zwei Objekte erwarteten Phasenlagen, zur Zeitsynchronisation verwendet wird.

**Geänderte Patentansprüche gemäss Regel 137(2) EPÜ.**

1. Verfahren zur Zeitsynchronisation, Frequenzsynchronisation und/oder Ermittlung einer Zeitdifferenz und/oder Frequenzabweichung zwischen einem ersten und einem zweiten Objekt, wobei die Objekte jeweils mindestens einen lokalen Zeitgeber und jeweils mindestens eine PLL aufweisen und jeweils die relative Phasenlage zweier Signale unterschiedlicher Frequenz mittels der PLL eines Objekts in Abhängigkeit zu der Zeitdifferenz der Erzeugung oder Abstrahlung der zwei Signale an einem der Objekte relativ zu seinem Zeitgeber bekannt ist und/oder die Phasenlage der PLL jedes der Objekte bei unterschiedlichen Frequenzen jeweils relativ zu seinem Zeitgeber bekannt ist, wobei die Zeitsynchronisation, Frequenzsynchronisation und/oder Ermittlung zwischen den Objekten funkbasiert mittels Phasenmessung(en) an einer Mehrzahl von zwischen den zwei Objekten übertragenen Signalen, insbesondere Funksignalen, unterschiedlicher Frequenz durchgeführt wird, **dadurch gekennzeichnet, dass** die Zeitsynchronisation und/oder Ermittlung der Zeitdifferenz mittels Bestimmung von Phasenverschiebung der Übertragung von Hinwegsignal vom ersten zum zweiten Objekt und Rückwegsignal vom zweiten zum ersten Objekt mittels in-line phase return durchgeführt wird.

2. Verfahren nach Anspruch 1, wobei der in-line phase return dadurch realisiert wird, dass die Phasenlage des Rückwegsignals gegenüber einer gegenüber dem lokalen Zeitgeber des zweiten Objekts bekannten Phasenlage, insbesondere der Phasenlage seiner PLL, um die negierte gemessene Phase des am zweiten Objekts empfangenen Hinwegsignals am zweiten Objekts verändert wird.

3. Verfahren nach Anspruch 3, wobei mehrfach Hin- und Rückwegsignale mit in-line phase return ausgetauscht werden, insbesondere bei unterschiedlichen Frequenzen.

4. Verfahren nach Anspruch 1 bis 3, wobei eine Zeitsynchronisation und/oder Ermittlung der Zeitdifferenz erfolgt und wobei die Phasenlage des am ersten Objekts empfangenen zweiten Signals am ersten Objekt bestimmt wird und zusammen mit der Phasenlage des ersten Signals am ersten Objekt gegenüber der PLL des ersten Objekts, insbesondere der Unterschied der Phasenlagen, zur Zeitsynchronisation verwendet wird, insbesondere die Änderung des Unterschieds zwischen zwei auf unterschiedlichen Frequenzen ausgetauschten Hin- und Rückwegsignalpaaren als Maß für die relative Änderung der lokalen Zeitgeber, insbesondere als deren relative Änderung verwendet wird.

5. Verfahren nach Anspruch 1, wobei die Zeitsynchronisation und/oder Ermittlung der Zeitdifferenz, insbesondere bei Kenntnis der Entfernung zwischen den Objekten, funkbasiert mittels, insbesondere bei unterschiedlichen Frequenzen wiederholtem, insbesondere ausschließlich, unidirektionalem Signalaustausch vom ersten zum zweiten Objekt, insbesondere auf mehreren Frequenzen, und auf Basis von Phasenmessung(en) an den oder dem am zweiten Objekt empfangenen Signal(en) erfolgt, insbesondere wobei die Phasenlage des am zweiten Objekts empfangenen unidirektionalen Signals des ersten Objekts am zweiten Objekt bestimmt wird und die Phasenlage des ersten Signals am zweiten Objekt gegenüber der PLL des zweiten Objekts, insbesondere der Unterschied zu einer rechnerisch bei gleichen Uhren erwarteten Phasenlagen, zur Zeitsynchronisation verwendet wird.

6. Verfahren nach einem der Ansprüche 1 bis 5, wobei das Verfahren während und/oder bei näherungsweise unverändertem Funkkanal oder bei näherungsweise bekanntem Funkkanal, Abstand und/oder näherungsweise bekannter Signalpfadlänge durchgeführt wird.

7. Verfahren nach Anspruch 5 oder 6, wobei die an empfangenen unidirektionalen Signalen auf einer ersten und einer zweiten Frequenz gemessene relative, also auf den Unterschied zwischen der ersten und zweiten Frequenz normierte, Differenz der durch die Übertragungen bewirkten Phasenverschiebungen zwischen den zwei unidirektionalen Signalen bei der ersten und zweiten Frequenz zur Zeitsynchronisation, insbesondere als Maß der Abweichung der lokalen Zeitgeber verwendet, insbesondere mit dem Proportionalitätsfaktor zwei Pi multipliziert als die Abweichung der lokalen Zeitgeber verwendet wird.

8. Verfahren nach einem der Ansprüche 1 bis 4, wobei die Frequenzsynchronisation und/oder Ermittlung der Frequenzabweichung mittels Bestimmung von Phasenverschiebung der Übertragung von Hinwegsignal vom ersten zum zweiten Objekt und Rückwegsignal vom zweiten zum ersten Objekt mittels in-line phase return durchgeführt wird, wobei insbesondere der in-line phase return dadurch realisiert wird, dass die Phasenlage des Rückwegsignals gegenüber einer gegenüber dem lokalen Zeitgeber des zweiten Objekts bekannten Phasenlage, insbesondere der Phasenlage seiner PLL, um die negierte gemessene Phase des am zweiten Objekts empfangenen Hinwegsignals am zweiten Objekts verändert wird.

**9.** Verfahren nach Anspruch 9, wobei mehrfach Hin- und Rückwegsignale mit in-line phase return ausgetauscht werden.

**10.** Verfahren nach einem der Ansprüche 9 bis 10, wobei die Phasenlage des am ersten Objekts empfangenen zweiten Signals am ersten Objekt bestimmt wird und zusammen mit der Phasenlage des ersten Signals am ersten Objekt gegenüber der PLL des ersten Objekts, insbesondere der Unterschied der Phasenlagen, zur Frequenzsynchronisation und/oder Ermittlung verwendet wird, insbesondere die Änderung des Unterschieds zwischen zwei zu unterschiedlichen Zeiten und insbesondere, zumindest näherungsweise, identischen Frequenzen, ausgetauschten Hin- und Rückwegsignalpaaren als Maß für die Frequenzabweichung verwendet wird.

**11.** Verfahren nach einem der Ansprüche 1 bis 10, wobei die Frequenzsynchronisation und/oder Ermittlung der Frequenzabweichung, insbesondere bei Kenntnis der relativen Bewegung, insbesondere Stillstand, zwischen den Objekten, funkbasiert mittels unidirektionalem Signalaustausch vom ersten zum zweiten Objekt, insbesondere zu mehreren Zeiten, und auf Basis von Phasenmessung(en) an den oder dem am zweiten Objekt empfangenen Signal(en) erfolgt.

**12.** Verfahren nach einem der Ansprüche 1 bis 11, wobei das Verfahren während und/oder bei näherungsweise unverändertem Funkkanal oder bei näherungsweise bekanntem Funkkanal, Abstand und/oder näherungsweise bekannter Signalpfadlänge durchgeführt wird.

**13.** Verfahren nach einem der Ansprüche 1 bis 12, wobei die zu zwei unterschiedlichen Zeiten an empfangenen unidirektionalen Signalen, also erste und zweite Zeit, gemessenen relative, also auf die Differenz der ersten und zweiten Zeiten normierte, Differenz der durch die Übertragungen bewirkten Phasenverschiebungen zwischen den zwei unidirektionalen Signalen zur ersten und zweiten Zeit als Maß der Abweichung der PLLs der zwei Objekte, insbesondere als die Abweichung der lokalen PLLs der Objekte verwendet wird.

**14.** Verfahren nach einem der Ansprüche 1 bis 13, wobei die Phasenlage des am zweiten Objekts empfangenen unidirektionalen Signals des ersten Objekts am zweiten Objekt bestimmt wird und die Phasenlage des ersten Signals am zweiten Objekt gegenüber der PLL des zweiten Objekts, insbesondere der Unterschied zu einer rechnerisch bei gleichen Frequenzen der PLLs der zwei Objekte erwarteten Phasenlagen, zur Zeitsynchronisation verwendet wird.

Fig. 1

Fig. 2

Fig. 3

## EUROPÄISCHER RECHERCHENBERICHT

Nummer der Anmeldung

EP 24 15 5873

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 502 736 A1 (STICHTING IMEC NEDERLAND [NL]) 26. Juni 2019 (2019-06-26) * Seite 5, Zeile 13 - Seite 8, Zeile 47 * * Abbildungen 1-3 * * Zusammenfassung * ----- | 1-15 | INV. G01S5/02 |
| X A | WO 2020/165134 A1 (LAMBDA:4 ENTW GMBH [DE]) 20. August 2020 (2020-08-20) * Seite 30, Zeile 5 - Seite 34, Zeile 10 * * Abbildungen 1-9 * * Zusammenfassung * ----- | 1,2,4-15 3 | |
| A | EP 3 564 703 A1 (LAMBDA 4 ENTW GMBH [DE]) 6. November 2019 (2019-11-06) * Spalte 27, Zeile 36 - Spalte 30, Zeile 43 * * Abbildungen 1-3 * * Zusammenfassung * ----- | 1-15 | |

**EINSCHLÄGIGE DOKUMENTE**

RECHERCHIERTE SACHGEBIETE (IPC)

G01S

Der vorliegende Recherchenbericht wurde für alle Patentansprüche erstellt

| Recherchenort | Abschlußdatum der Recherche | Prüfer |
|---|---|---|
| München | 18. Juli 2024 | von Walter, Sven-Uwe |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 15 5873

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-07-2024

| Im Recherchenbericht angeführtes Patentdokument | Datum der Veröffentlichung | Mitglied(er) der Patentfamilie | Datum der Veröffentlichung |
|---|---|---|---|
| EP 3502736 A1 | 26-06-2019 | EP 3502736 A1 | 26-06-2019 |
|  |  | JP 7096754 B2 | 06-07-2022 |
|  |  | JP 2019113529 A | 11-07-2019 |
|  |  | US 2019187263 A1 | 20-06-2019 |
| WO 2020165134 A1 | 20-08-2020 | CN 113424074 A | 21-09-2021 |
|  |  | EP 3714287 A1 | 30-09-2020 |
|  |  | EP 3913396 A1 | 24-11-2021 |
|  |  | US 2022128676 A1 | 28-04-2022 |
|  |  | WO 2020165134 A1 | 20-08-2020 |
| EP 3564703 A1 | 06-11-2019 | CN 110417494 A | 05-11-2019 |
|  |  | EP 3564702 A1 | 06-11-2019 |
|  |  | EP 3564703 A1 | 06-11-2019 |
|  |  | US 2019334752 A1 | 31-10-2019 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2022096515 A1
- EP 2710398 B1
- WO 2022096091 A1
- US 8446254 B2